# EUROPEAN PATENT SPECIFICATION

(11) **EP 3 793 936 B1**
(45) Date of publication and mention of the grant of the patent: **09.10.2024**
(21) Application number: 19727092.9
(22) Date of filing: 29.04.2019
(51) Int. Cl.: C01B 17/66

(54) **PROCESS FOR THE STABILISATION OF HYDROSULPHITE**
VERFAHREN ZUR STABILISIERUNG VON HYDROSULFIT
PROCÉDÉ DE STABILISATION DE L'HYDROSULPHITE

(30) Priority: 17.05.2018 IT 201800005473
(43) Date of publication of application: 24.03.2021
(73) Proprietor: Esseco S.r.l., 28069 San Martino di Trecate NO (IT)
(72) Inventor: MAZZOLA, Adelio, 28069 San Martino di Trecate (NO) (IT)
(74) Representative: Vatti, Francesco Paolo
(86) International application number: PCT/IB2019/053492
(87) International publication number: WO 2019/220248

(56) References cited:
- CA-A- 639 750
- DE-A1- 2 041 566
- US-A- 2 920 010
- US-A- 3 054 658
- US-A- 3 985 674

## Description

The present invention relates to a process for the stabilisation of hydrosulphite, in particular against its spontaneous combustion.

Sodium hydrosulphite or dithionite is a salt of the formula Na₂S₂O₄. This salt has various industrial uses. It is used, for example, as reducing agent in the textile and paper industry - especially in bleaching processes and in printing or vat dyeing - and in the synthesis of sodium sulphoxylate formaldehyde. The use is massive for these operations and this is the reason why the synthesis of this salt is a widespread process.

The proprietor of the present application, with the Italian Patent Application No. 102015000010804 proposed an alternative method for the synthesis of this salt, which led to better results than those offered by the previously known processes.

Sodium hydrosulphite is normally transported and sold in barrels, with a purity generally ranging between 85 and 90% by weight. This type of composition has a marked trend to decomposition, which becomes massive at temperatures above 75-80°C. The decomposition of this salt (and of similar salts with other counter-ions) leads to the formation of elemental sulphur, sulphur dioxide (SO₂), sulphites, sulphates, thiosulphates, metabisulphites and others. This decomposition also occurs when these salts are formulated in different ways.

The decomposition reaction is exothermic and the temperature increase that occurs favours the further decomposition of the remaining salt, according to an autocatalytic mechanism. If this process occurs under conditions in which the heat formed can easily be wasted, the problem is partial and is limited to the fact that the decomposed hydrosulphite no longer has the same original properties and its use may not lead to the desired results. If, on the other hand, this decomposition occurs in barrels or in closed metal containers of small but not negligible volume, then the temperature tends to rise rapidly, reaching high values, such as 200°C or even higher. Under these conditions, the elemental sulphur that has formed ignites in the air, also causing the formation of toxic gases. This fact results in the hydrosulphite being classified as a flammable substance and requiring the corresponding labeling, with code H251, which means that the substance is self-heating and can ignite.

The presence of even small amounts of water, which is compatible with certain values of air humidity, such as about 3% with respect to the total mass of the product, resulting in a further decomposition of the product, result in the dihydrate form, which also creates heat and is not stable, so that acidity and water are released which continue to sustain decomposition. With regard to the transportation thereof, hydrosulphite is assigned to class 4.2.

Obviously, the classification of a substance, such as hydrosulphite, among flammable substances has the consequence that its handling must take place under certain circumstances and that it cannot be moved like any other item. Checking of belonging to the aforementioned category takes place by evaluating the stability to fire at temperatures ranging between 100 and 140°, according to the test described in the UN manual Transport of dangerous goods - Manual of tests and criteria - in the following cited as UN manual - and is the test no. 4, reported in chapter 33.3.1.6.

Several methods for the stabilisation of the hydrosulphite salts are known.

WO2016/173 884 discloses a method for the stabilisation of dithionite with a titre ranging between 50 and 100%, adding a salt selected from alkaline metal carbonates, alkaline-earth metal carbonates, alkaline or alkaline-earth metal tripolyphosphates, sulphites, alkaline or alkaline-earth metal disulphites or sulphates, dextrose and complexing agents, in an amount ranging between 0.0001 and 40% by weight. The mixture is suspended in a solvent and contacted with a component, chosen among alkali metal oxides, sodium tetrahydroborate, anhydrous copper sulphate, phosphorus pentoxide, amino acids, such as arginine, lysine and histidine.

Italian Patent No. 1 060 296 discloses the production of sodium hydrosulphite, stabilised with the addition of an aqueous solution of carbonate and/or sodium hydroxide.

The patent US 3 923 960 discloses the stabilisation of sodium hydrosulphite by adding a salt with carboxylic acid of a primary, secondary or tertiary amine, having at least one hydrocarbon group of at least five carbon atoms.

The patent US 3 666 409 discloses the stabilisation of sodium hydrosulphite with the addition of a hydrophobic aliphatic amine or a quaternary salt thereof, having hydrocarbyl groups of at least five carbon atoms. Among the examples, primary, secondary and tertiary monoamines, N-alkyl substituted diamines, such as N-octyl ethylenediamine and N-stearyl propylenediamine.

The patent NL 6 404 003 discloses the stabilisation of hydrosulphite with propionaldehyde, butyraldehyde, valeraldehyde, benzaldehyde or mixtures thereof.

The patent NL 6 403 057 discloses the stabilisation of hydrosulphite with suberic, azelaic or sebacic acid or with salts or mixtures thereof.

A common feature of all known solutions is the addition of stabilisers, in quantities ranging between 0.01 and 40%.

US 3 054 658 discloses a sodium hydrosulphite composition, stabilised through the addition of 0.1 - 45% of a salt chosen among the sodium or potassium salts of a C₁-C₁₀ alkanoic acid or a benzoic acid.

DE 20 41 566 discloses the stabilisation of sodium hydrosulphite with an addition of oxalic acid and an inorganic carbonate.

US 3 985 674 relates to the stabilisation of sodium dithionite with small amounts of at least four agents, chosen among a chelant, zinc dithionite, zinc sulphate, sodium carbonate, sodium hydroxide, sodium tripolyphosphate, sodium phosphate and sodium metaborate.

CA 639 750 discloses a sodium hydrosulphite composition stabilised against spontaneous thermal decomposition by mixinga sodium or potassium salt of an alkanoic acid of 1 to 18 carbon atoms or of a benzoic acid.

US 2 920 010 discloses a process for the production of wood pulp, using a solution of sodium sulphite containing small percentages of sodium hydrosulphite and of sodium oxalate.

The underlying problem of the invention is to propose a process for the stabilisation of hydrosulphite, which allows to obtain a hydrosulphite which overcomes the aforementioned drawbacks and which allows to obtain high stability, so as not to have to transport it according to the rules governing the transport of hazardous substances and to make it stable, even with respect to the decomposition in the presence of water, even liquid, so as to remove this compound from class 4.2. This object is achieved through a process for the stabilization of hydrosulphite, characterised in that it involves the mixing of said hydrosulphite with one or more acids, chosen from 4-aminobenzoic acid, 4-hydroxybenzoic acid or a 4-alkyl benzoic acid and with an ammonium, alkaline or alkaline-earth salt of oxalic acid. The dependent claims describe preferred features of the invention.

Further features and advantages of the invention will anyhow be more apparent from the following detailed description of a preferred embodiment, given by mere way of non-limiting example and illustrated in the accompanying drawings, wherein:
Fig. 1 represents the temperature trend, during the execution of the test No.4: Test method for self-heating substances, paragraph 33.3.1.6 UN manual of a formulation stabilised with only carbonate of an alkaline metal;
Fig. 2 represents the temperature trend, during the execution of the test No.4: Test method for self-heating substances, paragraph 33.3.1.6 UN manual, of a formulation stabilised with carbonate of an alkaline metal and with an alkaline salt of benzoic acid; and
Figs. 3 and 4 represent the results of tests similar to those of Figs. 1 and 2, but with formulations according to the present invention.

As explained above, the problem addressed by the present invention is solved by adding a combination of an acid selected from 4-aminobenzoic acid, 4-hydroxybenzoic acid or 4-alkyl benzoic acid, such as 4-ethylbenzoic acid or 4-methylbenzoic acid with an ammonium or alkaline salt of oxalic acid. Preferably, the acid used is 4-aminobenzoic acid, for cost reasons, but the choice can be improved basing on considerations on costs, availability and conditions of use linked to the particular contingent situation.

The ammonium or alkaline salts of oxalic acid can be sodium oxalate, potassium oxalate, ammonium oxalate, lithium oxalate, caesium oxalate, while calcium and magnesium are used among the alkaline-earth salts.

It was found that the use of only one of each of the two components of the stabiliser, in the absence of the other, does not lead to the desired results.

Advantageously, a compound chosen from one or more ammonium or alkaline carbonates and one or more ammonium, alkaline or alkaline-earth tripolyphosphates can be added to the two components, further improving the stability of the final formulation. Usable alkaline carbonates are chosen from the group consisting of lithium carbonate, ammonium carbonate, sodium carbonate, potassium carbonate, caesium carbonate. Similarly, the tripolyphosphates which can be used according to the present invention are chosen from the group comprising lithium tripolyphosphate, ammonium tripolyphosphate, sodium tripolyphosphate, potassium tripolyphosphate, caesium tripolyphosphate, calcium tripolyphosphate, magnesium tripolyphosphate.

Preferably, the complex of the components listed above added to the hydrosulphite constitutes a percentage ranging between 0.1 and 20%, more preferably between 0.1 and 15% by weight of the total hydrosulphite: already at 15% the stabilisation is sufficient and a purer final product is maintained.

The preparation of the stabilised sodium hydrosulphite according to the present invention provides for the steps of mixing, in solid phase with an industrial mixer, the sodium hydrosulphite with an acid selected from 4-aminobenzoic acid, 4-hydroxybenzoic acid or 4-alkyl benzoic acid and an ammonium, alkaline or alkaline-earth salt of oxalic acid, such as sodium oxalate, potassium oxalate, ammonium oxalate, caesium oxalate, lithium oxalate, calcium oxalate, magnesium oxalate, possibly with an ammonium, alkaline or alkaline-earth salt of tripolyphosphate and possibly an ammonium or alkaline carbonate; the complex of the compounds added to the sodium hydrosulphite in the mixer must be not less than 0.1% and not more than 20%, preferably not more than 15% of the weight of the sodium hydrosulphite.

The mixing of the hydrosulphite with the added components occurs under dry conditions, in an industrial mixer, with a remarkable simplicity of preparation.

Preferably, the additional components (the stabilisers) are previously mixed with one another and then they are cold mixed to the hydrosulphite, which had preferably already been dried.

An alternative production process involves preparing a solution and/or suspension of the stabilisers in a suitable solvent - preferably methanol - washing the hydrosulphite with said solution and/or suspension and drying the solid product obtained, after suitable filtration. In this way, the distribution of the stabilisers within the hydrosulphite is more uniform.

The present invention also relates to a formulation, containing sodium hydrosulphite and between 0.1 and 20% by weight of a mixture containing: one or more acids chosen among 4-aminobenzoic acid, 4-hydroxybenzoic acid or a 4-alkyl benzoic acid, such as 4-ethylbenzoic acid or 4-methylbenzoic acid; an ammonium, alkaline or alkaline-earth salt of oxalic acid.

Preferably, said mixture furthermore contains: one or more ammonium or alkaline carbonates; one or more ammonium, alkaline or alkaline-earth tripolyphosphates.

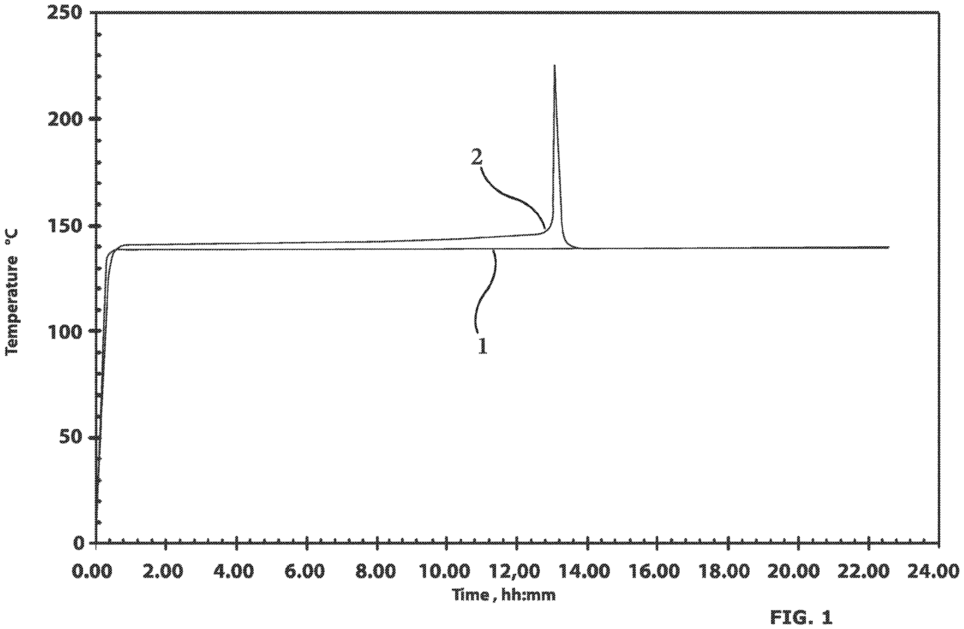

In fig. 1, curve 1 shows the temperature trend inside an oven within which a sample is arranged, stabilised with just alkaline carbonate, while curve 2 shows the temperature trend of the sample placed in the oven. The sample is placed in a cubic, metal mesh sample holder and the sample temperature is detected at the centre of the sample holder. It should be noted that, while the oven temperature reaches the value of 140 degrees in a time of about an hour, to which it remains stabilised for 22 hours, curve 2 has the same trend for 76 minutes, then a gradual rise begins, then after about 13 hours rises abruptly, reaching in a short time the value of 230°C, and then falling back to the value of 140°C of the oven. This peak clearly shows the auto-ignition reaction. Basically, the effect of carbonate stabilisation is below expectations, managing to avoid auto-ignition for only 13 hours.

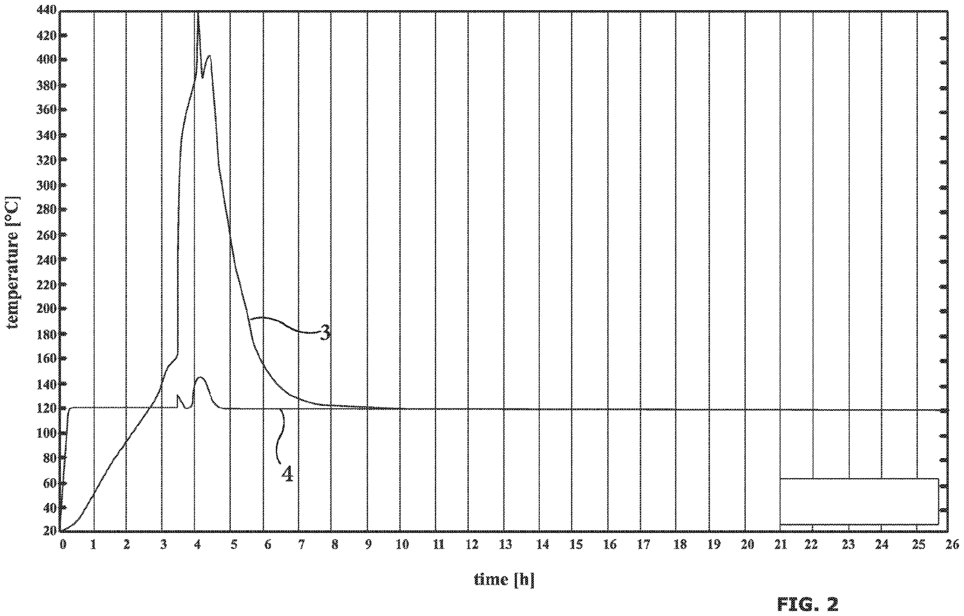

In fig. 2, curve 1 shows, as in fig. 1, the temperature trend inside an oven within which a sample of hydrosulphite is placed, stabilised with an alkali metal carbonate and with the benzoic salt of an alkaline metal, while the curve 3 represents the temperature trend in said hydrosulphite sample placed inside the oven. The sample is placed in a cubic, metal mesh sample holder and the sample temperature is detected at the centre of the sample holder. It should be noted that, while the oven temperature rises in several minutes to about 120°C, to then remain relatively stable for about 25 hours, curve 3 shows a linear temperature rise at the centre of the sample for about 3 hours, to then have a sharp rise up to about 420°C, from where there is a second peak and a fall down to 120°C of the oven in a time of further about 4-5 hours; note that the two peaks of curve 3 correspond to two peaks of 130-140°C of the oven temperature, highlighting how the amount of heat produced in the reaction of decomposition sulphur and sulphur combustion is such as to affect also the temperature of a stable and rather important heat source, like the oven. Note, however, that the sample volume in the experiment shown in fig. 2 is about 64 times the one involved in the experiment of fig. 1.

Basically, figs. 1 and 2 clearly show how the individual components used in the stabilisation system according to the present invention, do not provide sufficient stability to the sodium hydrosulphite if used singularly.

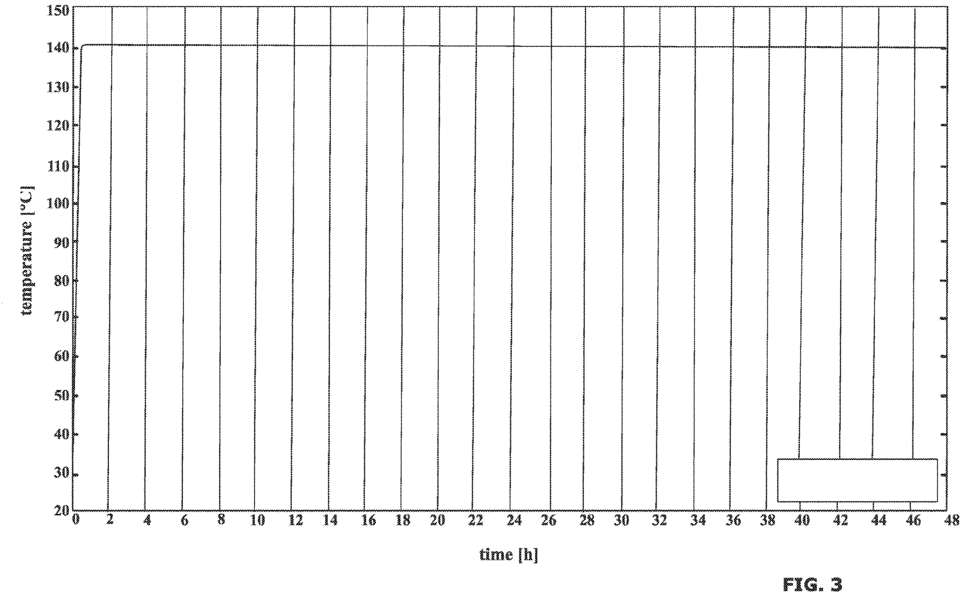

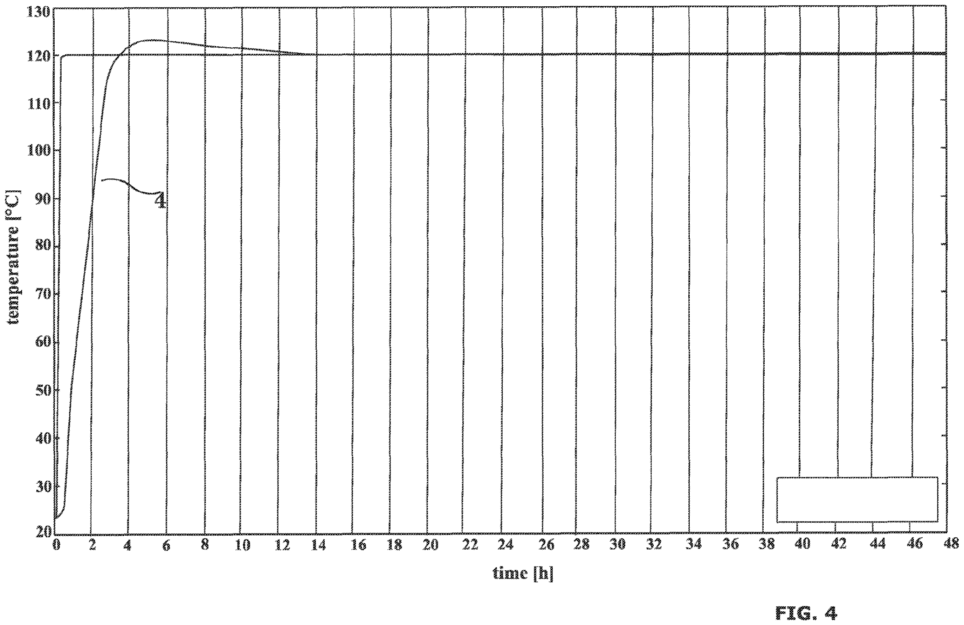

In figs. 3 and 4, the samples, prepared similarly to how they had been prepared in the previous two situations, but stabilised according to the present invention, are brought respectively to 140°C and 120°C, with the same volume ratios as the two preceding tests, and substantially maintain the same oven temperature for at least 48 hours, with only a very slight rise at the beginning (about 4°C), in the case of the test at 120°C (curve 4), wherein the volume, and consequently the mass, of product is higher. This means that, substantially, the temperature at the centre of the sample is determined for the whole range of temperature of the oven and not by reactions that take place on the sample or in the sample. This is a clear indication of stability. Even the slight peak of curve 4 (less than 10°C) seems due more to phenomena of thermal inertia (note that the temperature rise is slower than that of the oven), due to a delay in heat transfer, rather than to reactions, even in minimal quantities, of the hydrosulphite. The curves shown in figs. 3 and 4 can be obtained with different compositions according to the present invention. Some exemplary compositions are shown below (the percentages are intended by weight): 1) Sodium metabisulphite 4% - 7%, Sodium carbonate 1% - 2%, 4-amino benzoic acid 0.25% - 1%, Sodium oxalate 0.25% - 1%, Sodium hydrosulphite as required to 100%; 2) Sodium metabisulphite 4% - 7%, Sodium tripoliphosphate 1% - 2%, 4-amino benzoic acid 0.25% - 1%, Sodium oxalate 0.25% - 1%, Sodium hydrosulphite as required to 100%; 3) Sodium metabisulphite 4% - 7%, Sodium tripoliphosphate 1% - 2%, Sodium carbonate 1% - 2%, 4-amino benzoic acid 0.25% - 1%, Sodium oxalate 0.25% - 1%, Sodium hydrosulphite as required to 100%; 4) Sodium metabisulphite 4% - 7%, Sodium tripoliphosphate 1% - 5%, 4-amino benzoic acid 0.25% - 1%, Sodium oxalate 0.25% - 1%, Sodium hydrosulphite as required to 100%; 5) Sodium metabisulphite 4% - 7%, Sodium tripoliphosphate 5%, Sodium carbonate 0.5% - 1%, 4-amino benzoic acid 0.25% - 1%, Sodium oxalate 0.25% - 1%, Sodium hydrosulphite as required at 100%. Of course, other compositions according to the present invention, different then the ones just described, also give similar results.

The experiments summarised in the attached figures clearly show the efficacy in the stabilisation of the hydrosulphite. The combination of the materials used according to the invention almost completely avoids the auto-ignition and heating of the hydrosulphite, as well as probably its decomposition to sulphur. In this way, the transport of hydrosulphite can take place in a quiet manner, without requiring special safety measures, normally linked to the transport of this substance. Since the additions of foreign substances are minimal compared to the total mass of hydrosulphite, there are no substantial interferences of reactivity in the vast majority of the uses of this substance.

The experiments just described refer to the decomposition of hydrosulphite in the barrels in which it is stored.

Other experiments have been carried out with regard to the decomposition and combustion of sulphur in the presence of water, a reaction for which codified tests did not exist so far.

A hydrosulphite sample is placed in a Dewar flask with an internal diameter of 90 mm and a height of 350 mm. A PT100 thermocouple is immersed within the sample, in stainless steel, suitable for detecting temperatures up to about 500°C, wrapped in a steel sheath. A Eurotherm Chessel 5000 Series recorder records the temperature trend over time. In a first step, the quantity of sample introduced into the Dewar is 250 g, deposited on the bottom of the Dewar. Subsequently, a quantity of water ranging between 3 and 10% is added, making it percolate on the steel sheath that protects the thermocouple. 250 g of product are added and the Dewar is closed.

The temperature trend includes three phases: one of hydration, during which the reactions are assumed:

Na₂S₂O₄ + 2H₂O <=> Na₂S₂O₄.2H₂O

Na₂S₂O₄.2H₂O - - - - > NaHSO₃ + 1/2Na₂S₂O₃ + 3/2H₂O

Na₂S₂O₄ + H₂O + ½O₂ -> 2NaHSO₃

Na₂S₂O₅ + H₂O -> 2NaHSO₃,

a second decomposition step and a third decomposition and combustion step. Besides the decomposition due to water, a radical type decomposition is assumed, according to the reactions:

2Na₂S₂O₄ + 4NaHSO₃ -> 4Na₂SO₃ + 3SO₂ + S + 2H₂O

2NaHSO₃ -> Na₂SO₃ + H₂O + SO₂

SO₂ + 2Na₂S₂O₃ -> 2Na₂SO₄ + 3S

such mechanism being due to the increase in temperature (up to 110-130°C) due to decomposition. The third step, after a further increase in temperature due to radical reactions, starts at around 200°C.

In the absence of a stabiliser, the temperature of the hydrosulphite rises rapidly and the third step is immediately reached. In the case of stabilised product (for example with one of the above listed five mixtures), the temporal duration of the first two steps increases considerably, so that the sulphur ignition temperature is never reached or reached only after very long times. It should be considered that, while in all experiments without stabilisation the temperature reached at least 120-150°C in a maximum of two hours (with peaks of 250°C), once stabilisation had been carried out the temperature never exceeded 40°C for at least 24 hours: under these conditions, it is also possible to intervene to remove the causes of decomposition, before problems occur.

It is clear that the present invention overcomes all the problems encountered with the hydrosulphite formulations used so far, allowing their transport and storage under normal conditions, without the need for particular precautions, burdensome for those who must implement them and, in any case, never able to completely eliminate all risks.

In particular, the present invention allows to pass the verification No. 4 of paragraph 33.3.1.6 of the UN manual, so as to exempt the transport from the ADR/IMDG standards for transport in packages up to 3 m³, without introducing new phases of risk and new pictograms (in addition to that of irritant-harmful, already present today), with an ecological impact not higher than that of hydrosulphite alone. The stabiliser additions, according to the present invention, allow to maintain a titre greater than 80% of active ingredient and the stability of the titre has duration and value comparable with those of the prior art.

It is understood, however, that the invention is not to be considered as limited by the particular arrangement illustrated above, which represents only an exemplary embodiment of the same, but different variants are possible, all within the reach of a person skilled in the art, without departing from the scope of the invention itself, as defined by the following claims.

## Claims

1. Process for the stabilisation of hydrosulphite, **characterised in that** it provides the mixing of said hydrosulphite with one or more acids, chosen among 4-aminobenzoic acid, 4-hydroxybenzoic acid or a 4-alkyl benzoic acid and with an ammonium, alkaline or alkaline-earth salt of oxalic acid.

2. Process as claimed in claim 1), **characterised in that** a 4-alkyl benzoic acid is employed, chosen among 4-methylbenzoic acid and 4-ethylbenzoic acid.

3. Process as claimed in claim 1), **characterised in that** the acid used is 4-aminobenzoic acid.

4. Process as claimed in any one of claims from 1) to 3), **characterised in that** the ammonium, alkaline or alkaline-earth salts of oxalic acid are chosen from sodium oxalate, potassium oxalate, ammonium oxalate, lithium oxalate, caesium oxalate, calcium oxalate, magnesium oxalate.

5. Process as claimed in any one of the preceding claims, **characterised in that** a compound is added, chosen among one or more ammonium or alkaline carbonates and one or more ammonium, alkaline or alkaline-earth tripolyphosphates.

6. Process as claimed in claim 5), **characterised in that** said ammonium or alkaline carbonates are chosen in the group consisting of lithium carbonate, ammonium carbonate, sodium carbonate, potassium carbonate, caesium carbonate.

7. Process as claimed in claims 5) or 6), **characterised in that** said tripolyphosphates are chosen from the group comprising lithium tripolyphosphate, ammonium tripolyphosphate, sodium tripolyphosphate, potassium tripolyphosphate, caesium tripolyphosphate, calcium tripolyphosphate, magnesium tripolyphosphate.

8. Process as claimed in any one of the preceding claims, **characterised in that** the complex of the components added to hydrosulphite makes up a percentage ranging between 0.1 and 20% by weight of the total hydrosulphite.

9. Process as claimed in claim 8), **characterised in that** the complex of the components added to the hydrosulphite constitutes a percentage ranging between 0.1 and 15% by weight of the total hydrosulphite.

10. Process as claimed in any one of the preceding claims, **characterised in that** the mixing of hydrosulphite with said added components occurs under dry conditions, in an industrial mixer.

11. Process as claimed in any one of the preceding claims, **characterised in that** the additional components are previously mixed with one another and then they are cold mixed to the already dried hydrosulphite.

12. Process as claimed in any one of the preceding claims 1) to 9), **characterised in that** a solution and/or suspension of the additional components in a solvent is prepared, washing the hydrosulphite with said solution and/or suspension and drying the solid product obtained, after suitable filtration.

13. Process as claimed in claim 12), **characterised in that** said solvent is methanol.

14. Formulation, containing sodium hydrosulphite and between 0.1 and 20% by weight of a mixture containing: one or more acids chosen among 4-aminobenzoic acid, 4-hydroxybenzoic acid or 4-methylbenzoic acid; an ammonium, alkaline or alkaline-earth salt of oxalic acid.

15. Formulation as in claim 14), **characterised in that** said mixture furthermore contains: one or more ammonium or alkaline carbonates; one or more ammonium, alkaline or alkaline-earth tripolyphosphates.

## Patentansprüche

1. Verfahren zur Stabilisierung von Hydrosulfit, **dadurch gekennzeichnet, dass** es das Mischen des Hydrosulfits mit einer oder mehreren Säuren, ausgewählt aus 4-Aminobenzoesäure, 4-Hydroxybenzoesäure oder einer 4-Alkylbenzoesäure, und mit einem Ammonium-, Alkali- oder Erdalkalisalz von Oxalsäure bereitstellt.

2. Verfahren nach Anspruch 1, **dadurch gekennzeichnet, dass** eine 4-Alkylbenzoesäure, ausgewählt aus 4-Methylbenzoesäure und 4-Ethylbenzoesäure, eingesetzt wird.

3. Verfahren nach Anspruch 1, **dadurch gekennzeichnet, dass** die verwendete Säure 4-Aminobenzoesäure ist.

4. Verfahren nach einem der Ansprüche 1 bis 3, **dadurch gekennzeichnet, dass** die Ammonium-, Alkali- oder Erdalkalisalze von Oxalsäure ausgewählt sind aus Natriumoxalat, Kaliumoxalat, Ammoniumoxalat, Lithiumoxalat, Cäsiumoxalat, Calciumoxalat und Magnesiumoxalat.

5. Verfahren nach einem der vorhergehenden Ansprüche, **dadurch gekennzeichnet, dass** eine Verbindung, ausgewählt aus einem oder mehreren Ammonium- oder Alkalicarbonaten und einem oder mehreren Ammonium-, Alkali- oder Erdalkalitripolyphosphaten, zugegeben wird.

6. Verfahren nach Anspruch 5, **dadurch gekennzeichnet, dass** die Ammonium- oder Alkalicarbonate ausgewählt sind aus der Gruppe bestehend aus Lithiumcarbonat, Ammoniumcarbonat, Natriumcarbonat, Kaliumcarbonat und Cäsiumcarbonat.

7. Verfahren nach Anspruch 5 oder 6, **dadurch gekennzeichnet, dass** die Tripolyphosphate ausgewählt sind aus der Gruppe bestehend aus Lithiumtripolyphosphat, Ammoniumtripolyphosphat, Natriumtripolyphosphat, Kaliumtripolyphosphat, Cäsiumtripolyphosphat, Calciumtripolyphosphat und Magnesiumtripolyphosphat.

8. Verfahren nach einem der vorhergehenden Ansprüche, **dadurch gekennzeichnet, dass** der Komplex der dem Hydrosulfit zugegebenen Komponenten einen Prozentsatz im Bereich zwischen 0,1 und 20 Gew.-% des gesamten Hydrosulfits ausmacht.

9. Verfahren nach Anspruch 8), **dadurch gekennzeichnet, dass** der Komplex der dem Hydrosulfit zugegebenen Komponenten einen Prozentsatz im Bereich zwischen 0,1 und 15 Gew.-% des gesamten Hydrosulfits ausmacht.

10. Verfahren nach einem der vorhergehenden Ansprüche, **dadurch gekennzeichnet, dass** das Mischen von Hydrosulfit mit den zugegebenen Komponenten unter trockenen Bedingungen in einem Industriemischer erfolgt.

11. Verfahren nach einem der vorhergehenden Ansprüche, **dadurch gekennzeichnet, dass** die zusätzlichen Komponenten zuvor miteinander gemischt werden und dann zu dem bereits getrockneten Hydrosulfit kalt zugemischt werden.

12. Verfahren nach einem der vorhergehenden Ansprüche 1 bis 9, **dadurch gekennzeichnet, dass** eine Lösung und/oder Suspension der zusätzlichen Komponenten in einem Lösungsmittel hergestellt wird, das Hydrosulfit mit der Lösung und/oder Suspension gewaschen wird und das erhaltene feste Produkt nach geeigneter Filtration getrocknet wird.

13. Verfahren nach Anspruch 12, **dadurch gekennzeichnet, dass** das Lösungsmittel Methanol ist.

14. Formulierung, enthaltend Natriumhydrosulfit und zwischen 0,1 und 20 Gew.-% einer Mischung, enthaltend: eine oder mehrere Säuren, ausgewählt aus 4-Aminobenzoesäure, 4-Hydroxybenzoesäure oder 4-Methylbenzoesäure; und ein Ammonium-, Alkali- oder Erdalkalisalz von Oxalsäure.

15. Formulierung nach Anspruch 14, **dadurch gekennzeichnet, dass** die Mischung ferner enthält: ein oder mehrere Ammonium- oder Alkalicarbonate; ein oder mehrere Ammonium-, Alkali- oder Erdalkalitripolyphosphate.

## Revendications

1. Procédé de stabilisation d'hydrosulfite, **caractérisé en ce qu'**il assure le mélange dudit hydrosulfite avec un ou plusieurs acides, choisis parmi l'acide 4-aminobenzoïque, l'acide 4-hydroxybenzoïque ou un acide 4-alkyl benzoïque et avec un sel d'ammonium, alcalin ou alcalino-terreux de l'acide oxalique.

2. Procédé selon la revendication 1, **caractérisé en ce qu'**un acide 4-alkyl benzoïque est employé, choisi parmi l'acide 4-méthylbenzoïque et l'acide 4-éthylbenzoïque.

3. Procédé selon la revendication 1, **caractérisé en ce que** l'acide utilisé est l'acide 4-aminobenzoïque.

4. Procédé selon l'une quelconque des revendications de 1 à 3, **caractérisé en ce que** les sels d'ammonium, alcalins ou alcalino-terreux de l'acide oxalique sont choisis parmi l'oxalate de sodium, l'oxalate de potassium, l'oxalate d'ammonium, l'oxalate de lithium, l'oxalate de césium, l'oxalate de calcium, l'oxalate de magnésium.

5. Procédé selon l'une quelconque des revendications précédentes, **caractérisé en ce qu'**un composé est ajouté, choisi parmi un ou plusieurs carbonates d'ammonium ou alcalins et un ou plusieurs tripolyphosphates d'ammonium, alcalins ou alcalino-terreux.

6. Procédé selon la revendication 5, **caractérisé en ce que** lesdits carbonates d'ammonium ou alcalins sont choisis dans le groupe consistant en carbonate de lithium, carbonate d'ammonium, carbonate de sodium, carbonate de potassium, carbonate de césium.

7. Procédé selon les revendications 5 ou 6, **caractérisé en ce que** lesdits tripolyphosphates sont choisis dans le groupe comprenant le tripolyphosphate de lithium, le tripolyphosphate d'ammonium, le tripolyphosphate de sodium, le tripolyphosphate de potassium, le tripolyphosphate de césium, le tripolyphosphate de calcium, le tripolyphosphate de magnésium.

8. Procédé selon l'une quelconque des revendications précédentes, **caractérisé en ce que** le complexe des composants ajoutés à l'hydrosulfite représente un pourcentage allant de 0,1 à 20 % en poids de l'hydrosulfite total.

9. Procédé selon la revendication 8, **caractérisé en ce que** le complexe des composants ajoutés à l'hydrosulfite constitue un pourcentage allant de 0,1 à 15 % en poids de l'hydrosulfite total.

10. Procédé selon l'une quelconque des revendications précédentes, **caractérisé en ce que** le mélange d'hydrosulfite avec lesdits composants ajoutés s'effectue dans des conditions à sec, dans un mélangeur industriel.

11. Procédé selon l'une quelconque des revendications précédentes, **caractérisé en ce que** les composants additionnels sont préalablement mélangés entre eux, puis ils sont mélangés à froid avec l'hydrosulfite déjà séché.

12. Procédé selon l'une quelconque des revendications 1 à 9 précédentes, **caractérisé en ce qu'**une solution et/ou une suspension des composants additionnels dans un solvant est préparée, en lavant l'hydrosulfite avec ladite solution et/ou suspension et en séchant le produit solide obtenu, après une filtration convenable.

13. Procédé selon la revendication 12, **caractérisé en ce que** ledit solvant est le méthanol.

14. Formulation, contenant de l'hydrosulfite de sodium et entre 0,1 et 20 % en poids d'un mélange contenant : un ou plusieurs acides choisis parmi l'acide 4-aminobenzoïque, l'acide 4-hydroxybenzoïque ou l'acide 4-méthylbenzoïque ; un sel d'ammonium, alcalin ou alcalino-terreux de l'acide oxalique.

15. Formulation selon la revendication 14, **caractérisée en ce que** ledit mélange contient en outre : un ou plusieurs carbonates d'ammonium ou alcalins ; un ou plusieurs tripolyphosphates d'ammonium, alcalins ou alcalino-terreux.
